# FASCICULE DE BREVET EUROPEEN

(11) **EP 3 969 781 B1**
(45) Date de publication et mention de la délivrance du brevet: **18.11.2026**
(21) Numéro de dépôt: 20724860.0
(22) Date de dépôt: 14.05.2020
(51) Int. Cl.: F16F 15/134

(54) **DISPOSITIF DE TRANSMISSION DE COUPLE ÉQUIPÉ D'UN MOYEN DE RÉTENTION**
DREHMOMENTÜBERTRAGUNGSVORRICHTUNG MIT HALTEVORRICHTUNG
TORQUE TRANSMISSION DEVICE EQUIPPED WITH A RETENTION MEANS

(30) Priorité: 16.05.2019 FR 1905140
(43) Date de publication de la demande: 23.03.2022
(73) Titulaire: Valeo Embrayages, 80009 Amiens (FR)
(72) Inventeur: CANTELLA, Andrea, 95892 CERGY PONTOISE (FR); BOETTI, Daniele, 95892 CERGY PONTOISE (FR); GURRIERI, Vincenzo, 95892 CERGY PONTOISE (FR)
(74) Mandataire: Valeo Powertrain Systems
(86) Numéro de dépôt international: PCT/EP2020/063542
(87) Numéro de publication internationale: WO 2020/229632

(56) Documents cités:
- EP-A1- 1 831 585
- EP-A1- 2 556 268
- EP-A2- 1 462 675
- WO-A1-2018/149430
- DE-A1- 102013 003 628
- FR-A1- 2 829 819
- FR-A1- 2 934 658

## Description

L'invention concerne un dispositif de transmission de couple équipé d'un moyen de rétention pour un véhicule, notamment pour un véhicule automobile. L'invention s'applique plus particulièrement aux véhicules automobiles du type hybride.

Il est connu des dispositifs de transmission de couple comprenant un volant primaire et un volant secondaire aptes à tourner l'un par rapport à l'autre à l'encontre de l'action d'un organe élastique interposé entre le volant primaire et le volant secondaire. Cet organe élastique est notamment logé dans une chambre formée par le volant primaire. Cette chambre renferme un lubrifiant telle de la graisse pour assurer le bon fonctionnement de l'organe élastique. Le volant primaire forme une masse primaire délimitant un premier appui. Le volant secondaire forme un disque délimitant également un deuxième appui. L'organe élastique est configuré de telle manière à être placé en appui circonférentiellement entre le premier appui et le deuxième appui.

Un dispositif d'hystérésis est également prévu entre le volant primaire et le volant secondaire visant à réduire les excès d'oscillation de torsion de l'organe élastique, qui surviennent notamment au démarrage du véhicule.

Pour empêcher une éventuelle fuite de cette graisse en dehors de la chambre, il est connu de disposer un moyen d'étanchéité entre le volant primaire et le volant secondaire. Notamment il est connu qu'une rondelle en métal soit placée axialement en appui contre la masse primaire du volant primaire et contre le disque du volant secondaire. Ainsi, la graisse ne risque pas de s'échapper du logement de l'organe élastique. Un tel agencement est par exemple connu du document EP2556268.

Or, l'appui de cette rondelle de métal génère du frottement entre la rondelle et la masse primaire, d'une part, et entre la rondelle et le disque, d'autre part. Ce frottement s'ajoute aux frottements générés par le dispositif d'hystérésis déjà configuré pour tenir compte des excès d'oscillation de torsion de l'organe élastique.

La présente invention a pour objet de fournir un dispositif de transmission de couple comprenant un moyen de rétention qui n'interfère pas avec le dispositif d'hystérésis déjà présent.

L'invention y parvient, selon l'un de ses aspects, à l'aide d'un dispositif de transmission de couple de couple pour un véhicule, notamment un véhicule automobile, comprenant
- un élément d'entrée de couple apte à être relié à un élément moteur,
- un élément de sortie de couple, et

- un organe élastique interposé entre l'élément d'entré de couple et l'élément de sortie de couple, une chambre formée par l'élément d'entrée de couple, la chambre renfermant l'organe élastique et un lubrifiant, le dispositif de transmission comprenant également au moins un moyen de rétention empêchant le lubrifiant de sortir de la chambre, le moyen de rétention étant fixé à l'élément d'entrée de couple ou à l'élément de sortie de couple tout en étant mobile en rotation par rapport à l'élément de sortie de couple ou par rapport à l'élément d'entrée de couple respectivement.

Par mobile en rotation par rapport au deuxième élément ou par rapport au premier élément on entend que le moyen de rétention est espacé sans frottement vis-à-vis du deuxième élément ou du premier élément.

Le moyen de rétention est disposé mobile en rotation par rapport à l'élément d'entrée de couple ou par rapport à l'élément de sortie de couple de telle sorte à ce qu'un jeu J soit présent entre le moyen de rétention et l'élément d'entrée de couple ou l'élément de sortie de coule. Ce jeu J permet d'espacer le moyen de rétention de l'élément d'entrée de couple ou de l'élément de sortie de couple de manière à éviter que ces éléments soient en contact l'un avec l'autre.

Selon un mode de réalisation de l'invention, le moyen de rétention est localisé entièrement à l'intérieur de la chambre. En particulier, la chambre est délimitée axialement entre un premier axe et entre un deuxième axe, le premier axe et le deuxième axe passant par l'élément d'entrée de couple et coupant perpendiculairement un axe de rotation du dispositif de transmission de couple.

Le volant primaire est configuré pour former une chambre renfermant de la graisse. La chambre forme un volume cylindrique de révolution autour de l'axe de rotation du dispositif de transmission de couple. Dans un exemple, l'élément d'entrée de couple est formé par un volant primaire comprenant une masse primaire et un couvercle. La chambre est délimitée axialement par un premier axe traversant le volant primaire et par un deuxième axe traversant le couvercle. Ainsi, le moyen de rétention est réalisé de telle manière à loger entièrement à l'intérieur de la chambre, axialement entre le premier axe et le deuxième axe.

Selon un mode de réalisation de l'invention, le moyen de rétention est localisé radialement en dessous de l'organe élastique.

Selon un mode de réalisation de l'invention, le moyen de rétention forme une rondelle formant un L en coupe transversale.

Selon un mode de réalisation de l'invention, le moyen de rétention comprend une première partie et une deuxième partie, la première partie étant fixée sur l'élément d'entrée de couple ou l'élément de sortie de couple, la deuxième partie s'étendant de telle manière à retenir le lubrifiant à l'intérieur de la chambre. Selon un mode de réalisation de l'invention, le moyen de rétention comprend au moins un premier orifice servant la fixation du moyen de rétention à l'élément d'entrée de couple ou à l'élément de sortie de couple.

Selon un mode de réalisation de l'invention, l'élément de sortie de couple comprend un disque et une masse secondaire, le disque étant apte à servir de surface d'appui pour l'organe élastique, le moyen de rétention comprenant également au moins un deuxième orifice configuré de telle manière à autoriser une fixation du disque avec la masse secondaire au travers du moyen de rétention.

Selon un mode de réalisation de l'invention, l'élément d'entrée forme une masse primaire et un couvercle liés en rotation l'un à l'autre pour former la chambre et pour former au moins un premier appui contre lequel s'appuie l'organe élastique, l'élément de sortie de couple comprend un disque et une masse secondaire, le disque formant un deuxième d'appui pour l'organe élastique, le dispositif de transmission comportant un premier moyen de rétention et un deuxième moyen de rétention, le premier moyen de rétention étant localisé entre la masse primaire et le disque et le deuxième moyen de rétention étant situé entre le disque et le couvercle.

Selon un mode de réalisation de l'invention, le dispositif comporte également un dispositif pendulaire comprend un support et une pluralité de masses pendulaires.

Selon un mode de réalisation de l'invention, le support étant formé par l'élément de sortie. L'invention a également pour objet un véhicule hybride comprenant un moteur électrique et un dispositif de transmission de couple comme précédemment mentionné.

L'invention sera mieux comprise, et d'autres buts, détails, caractéristiques et avantages de celle-ci apparaîtront plus clairement au cours de la description suivante de plusieurs modes de réalisation de l'invention, donné uniquement à titre illustratif et non limitatif, en référence aux figures annexées.
[fig. 1] représente un dispositif de transmission de couple, selon un premier mode de réalisation de l'invention ;
[fig. 2] représente une vue en perspective d'un moyen de rétention selon le premier mode de réalisation de l'invention ;
[fig. 3] représente une vue de face d'un dispositif pendulaire équipé d'un moyen de rétention du dispositif de transmission de couple, selon le premier mode de réalisation de l'invention,
[fig. 4] représente une coupe transversale selon l'axe A-A de la [fig. 3].
[fig. 5] illustre un agrandissement d'une partie en B de la [fig. 4] ;
[fig. 6] représente en perspective et en éclaté une partie du dispositif de transmission de couple, selon le premier mode de réalisation de l'invention ;
[fig. 7] représente un dispositif de transmission de couple, selon un deuxième mode de réalisation de l'invention ;
[fig. 8] représente une vue en perspective et en éclaté d'une partie du dispositif de transmission de couple, selon le deuxième mode de réalisation de l'invention
[fig. 9] représente un schéma d'un dispositif de transmission de couple, selon un troisième mode de réalisation de l'invention.

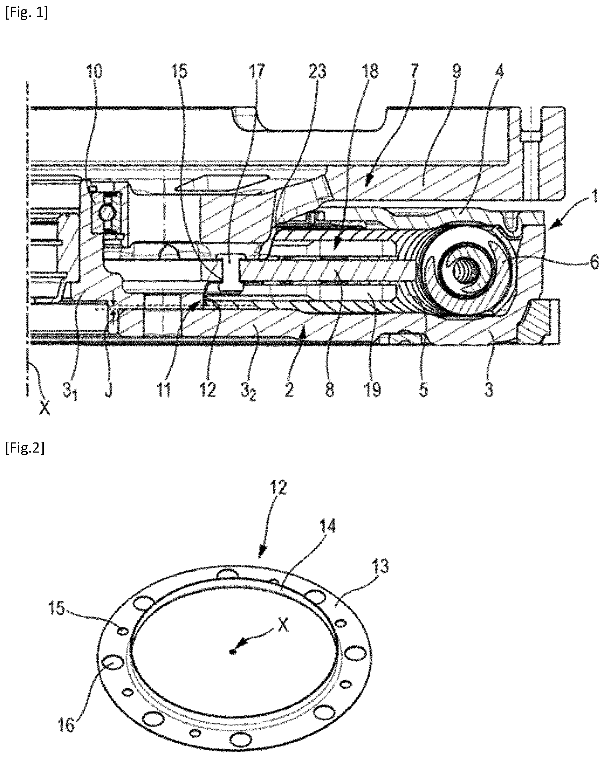

La figure 1 illustre un dispositif de transmission de couple 1 d'un véhicule pour une transmission du type manuelle, selon un premier mode de réalisation de l'invention. Le dispositif de transmission de couple 1 comporte un axe X de rotation. Le dispositif de transmission de couple 1 comporte également un volant primaire 2 apte à être connecté à un vilebrequin d'un moteur (non représenté). Ce volant primaire 2 est formé d'une masse primaire 3 et d'un couvercle 4 liés en rotation l'un par rapport à l'autre.

La masse primaire 3 est formée dans cet exemple en deux parties, l'une formant un moyeu primaire 3₁ et l'autre formant un plateau 3₂. La masse primaire 3 et le couvercle 4 sont agencés de manière à délimiter une chambre 5 apte à recevoir un organe élastique 6 et à renfermer de la graisse. L'organe élastique est formé dans cet exemple par un premier ressort et par un deuxième ressort dont chacune des premières extrémités est montée en appui contre la masse primaire 3 et le couvercle 4 et dont chacune des deuxièmes extrémités est placée en appui contre un volant secondaire 7.

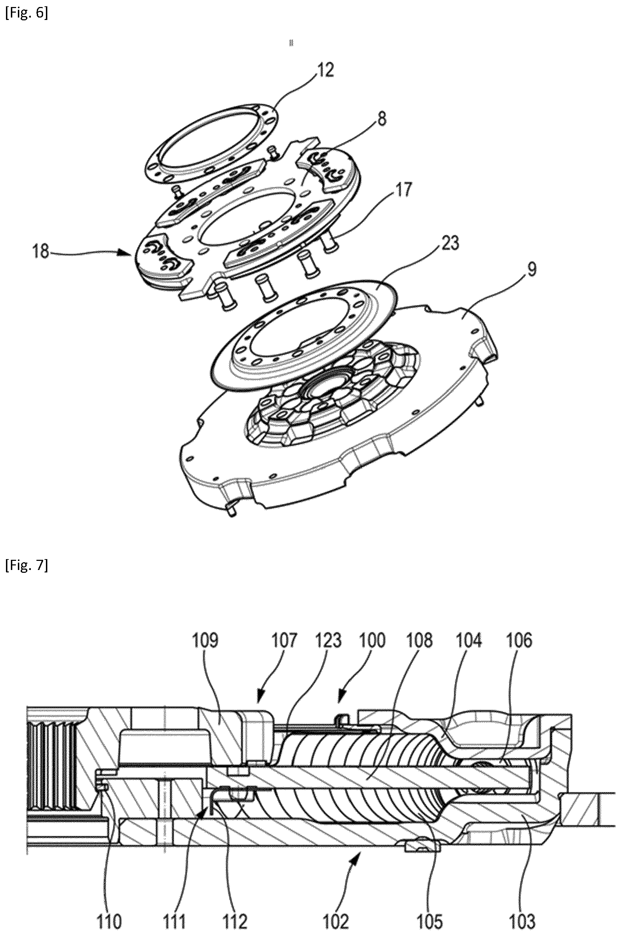

Le dispositif de transmission de couple 1 comporte également un volant secondaire 7. Le volant secondaire 7 est formé par un disque 8 et par une masse secondaire 9. Le disque 8 sert d'appui aux ressorts de l'organe élastique 6, par leur deuxième extrémité. La masse secondaire 9 peut dans un exemple former un plateau de pression d'un embrayage à disque, figures 1 et 6. L'organe élastique 6 est interposé entre le volant primaire 2 et le volant secondaire 7 de telle manière à autoriser une rotation du premier volant 2 par rapport au volant secondaire 7 l'un par rapport à l'autre. Le volant primaire 2 et le volant secondaire 7 sont reliés l'un à l'autre par l'intermédiaire de l'organe élastique 6 et également par l'intermédiaire d'un roulement 10. Le roulement 10 est disposé entre la masse secondaire 9 et le moyeu primaire 3₁.

Selon l'invention, le dispositif de transmission de couple 1 comporte un moyen de rétention 11 limitant, voir empêchant la graisse de sortir de la chambre 5. Ce moyen de rétention 11 est formé dans cet exemple par une rondelle de rétention 12 en forme de L en coupe transversale comme visible sur la figure 1. Cette rondelle de rétention 12 est fixée au disque 8, radialement en dessous de l'organe élastique 6. En d'autres termes, la rondelle de rétention 12 est située entre ce même axe X et l'organe élastique 6.

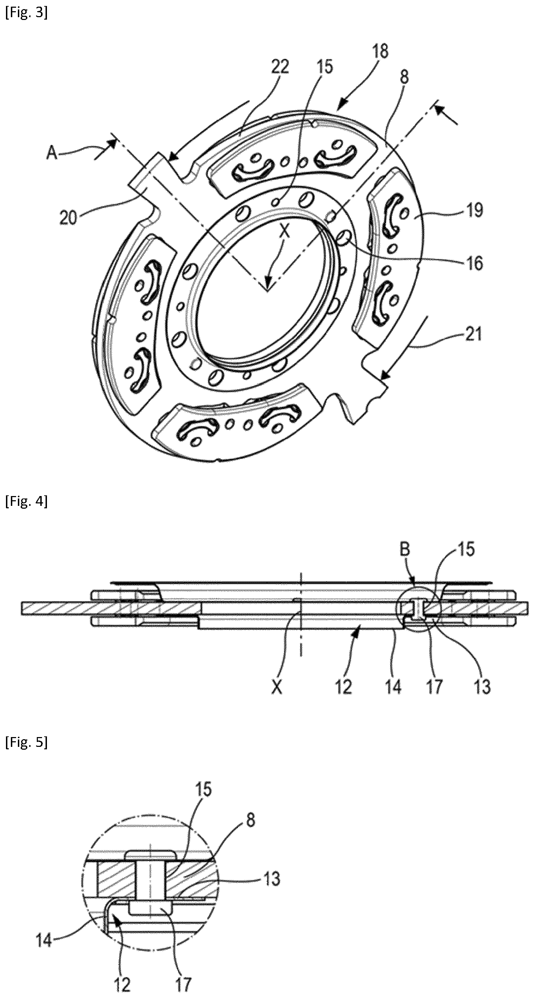

La rondelle de rétention 12 peut être formée par une feuille métallique. Cette rondelle de rétention 12 forme en coupe transversale telle que représentée en figure 1 une forme en L avec une première partie 13 et une deuxième partie 14, figure 2. La deuxième partie 14 est plus petite que la première partie 13. La première partie 13 comporte plusieurs orifices de rivetage tels que 15 et plusieurs autres orifices de passage tels que 16. Les orifices de rivetages 15 permettent la fixation de la rondelle de rétention 12 au disque 8. Leur diamètre est plus petit que le diamètre des orifices de passage 16. En effet, les orifices de passages 16 sont configurés de telle sorte à autoriser le passage d'outils ou de rivets pour la fixation du disque 8 à la masse secondaire 9. Sur les figures 1 et 5, est visible l'orifice de rivetage 15 et un rivet 17 servant à relier la rondelle de rétention 12 au disque 8.

La première partie 13 et la deuxième partie 14 sont agencés entre elles de telle manière à être perpendiculaire l'une par rapport à l'autre. La deuxième partie 14 s'étend axialement depuis le disque 8 en direction du plateau 3₂ de la masse primaire 3 sans le toucher. On s'assure qu'il n'existe aucun frottement entre la rondelle de rétention 12 et la masse primaire 3. Il existe un léger jeu J entre l'extrémité de la deuxième partie 14 de la rondelle de rétention 12 et le plateau 3₂ de la masse primaire 3. Le jeu J est mesuré le long d'un axe parallèle à l'axe X entre l'extrémité de la deuxième partie 14 et un bord du plateau 3₂. La deuxième partie 14 est située radialement en dessous du rivet 17 servant à la fixation de la rondelle de rétention 12 au disque 8.

Les orifices de rivetages 15 et les orifices de passage 16 sont formés sur la première partie 13 tout en étant diamétralement opposés selon cet exemple de réalisation de l'invention.

Le dispositif de transmission de couple selon ce premier mode de réalisation de l'invention comporte également un dispositif pendulaire 18, figures 1, 3, 4 et 6. Ce dispositif pendulaire 18 comporte un support de pendules formé ici par le disque 8. Ce dispositif pendulaire 18 comporte également une pluralité de masses pendulaires telles que 19 réparties circonférentiellement sur le disque 8 et de part et d'autre du disque 8. Les masses pendulaires 19 sont reliées deux à deux de part et d'autre du disque 8 de telle sorte à ce qu'elles sont aptes à se déplacer par rapport au disque 8 sous l'effet de la rotation et de la force centrifuge. Les masses pendulaires 19 sont disposées radialement entre le pourtour périphériques externe 22 du disque 8, d'une part, et les orifices de rivetage 15 et les orifices de passages 16. Le dispositif pendulaire 18 est connu en soi et ne sera pas ici plus détaillé.

Le disque 8 comporte deux extensions radiales telles que 20. Dans l'exemple représenté, entre ces deux extensions radiales 20, un espace circonférentiel 21 est délimité le long du disque 8. Cet espace circonférentiel 21 est configuré de telle manière à recevoir le premier ressort et le deuxième ressort de l'organe élastique 6, le long d'une surface périphérique 22 du disque 8.

Une rondelle d'étanchéité 23 est également disposée entre le disque 8 et la masse secondaire 9. Cette rondelle d'étanchéité 23 est située en appui contre le disque 8 et contre le masse secondaire 9.

En variante, il pourrait également être prévu d'interposer, à la place ce cette rondelle d'étanchéité 23, une autre rondelle de rétention, similaire à celle précédemment décrite, entre le disque 8 et le couvercle 4.

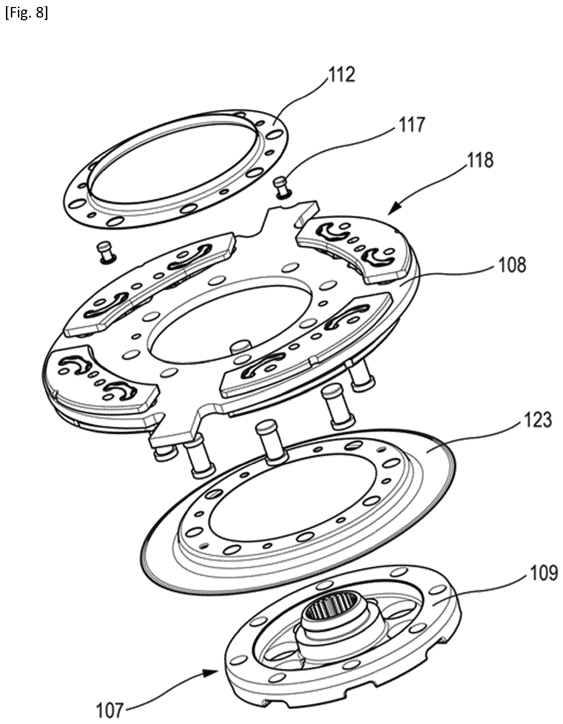

Figure 8 est représenté un dispositif de transmission de couple 100 pour une transmission du type automatique, selon un deuxième mode de réalisation de l'invention. Ce dispositif de transmission de couple 100 présente un volant primaire 102 avec une masse primaire 103 et un couvercle 104 reliés en rotation l'un à l'autre tout en renfermant une chambre 105. Dans cette chambre 105 est logé un organe élastique 106. Le dispositif de transmission de couple 100 comporte également un volant secondaire 107 comprenant un disque 108 et un moyeu 109. Le volant primaire 102 et le volant secondaire 107 sont reliés l'un à l'autre par l'intermédiaire d'un moyen de liaison élastique 101 autorisant un léger mouvement axial du volant secondaire 107 par rapport au volant primaire 102. Ce moyen de liaison élastique 101 peut être représenté comme dans cet exemple sous la forme d'un circlips.

Le dispositif de transmission de couple 100 comporte également un moyen de rétention 111 formé par une rondelle de rétention 112. La rondelle de rétention 112 est similaire à celle déjà décrite en figures 1, 2, 3, 4, 5 et 6.

En variante également, il pourrait également être prévu d'interposer une autre rondelle de rétention, similaire à la celle précédemment décrite, entre le disque 108 et le couvercle 104.

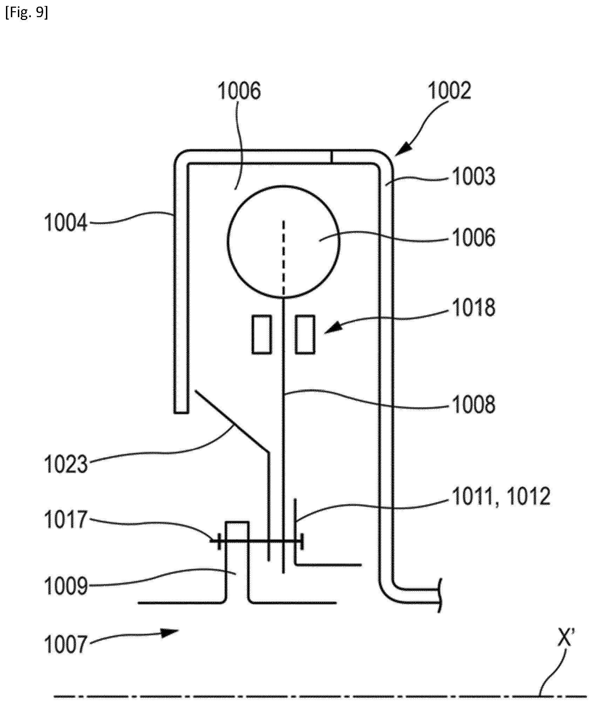

Figure 9 est illustré un troisième mode de réalisation représentant cette variante. Ce troisième mode de réalisation de l'invention est applicable aussi bien pour un véhicule comprenant une transmission du type manuelle ou un véhicule comprenant une transmission du type automatique. Plus précisément, la figure 9 illustre un dispositif de transmission de couple 1000 avec une masse primaire 1003, un couvercle 1004, un organe élastique 1006, une chambre 1005, un disque 1008, une masse secondaire 1009 faisant partie d'un volant secondaire 1007, un dispositif pendulaire 1018 et un axe de rotation X'. Deux rondelles de rétention 1012 et 1023 selon l'invention sont prévues. Une première rondelle de rétention 1012 similaire à celles décrites en figures 2 ou 7 et une deuxième rondelle de rétention 1023. La première rondelle de rétention 1012 est montée fixée sur le support 1008 tout en s'étendant en direction de la masse primaire 1003 sans la toucher. La deuxième rondelle de rétention 1023 est fixée au disque 1008 et s'étend en direction du couvercle 1004 sans le toucher. Dans cet exemple non limitatif, la deuxième rondelle de rétention 1023 présente une partie qui s'étend en direction du couvercle 1004 radialement vers l'extérieur de manière oblique. En fonction de la forme du couvercle 1004, cette dernière partie pourrait également s'étendre axialement.

Concernant la première rondelle de rétention 1012, cette dernière comporte dans ce même exemple non limitatif une partie qui s'étend axialement en direction de la masse primaire 1003. Cette dernière partie pourrait s'étendre également obliquement. La disposition de ces rondelles de rétention est réalisée de telle manière à retenir la graisse qui est stockée dans la chambre 1005.

Les deux rondelles de rétention 1012 et 1023 sont reliées entre elles par un même élément de fixation tel qu'un rivet 1017. Dans cet exemple, plusieurs rivets tels que 1017 peuvent être prévus. Cet élément de fixation 1017 traverse la masse secondaire 1009 tout en reliant la première rondelle de rétention 1012 et la deuxième rondelle de rétention 1023.

## Revendications

1. Dispositif de transmission de couple (1,100,1000) pour un véhicule, notamment un véhicule automobile, comprenant
- un élément d'entrée de couple (2,102,1002) apte à être relié à un élément moteur,
- un élément de sortie de couple (7,107,1007), et
- un organe élastique (6,106,1006) interposé entre l'élément d'entré de couple et l'élément de sortie de couple, une chambre (5,105) formée par l'élément d'entrée de couple, la chambre renfermant l'organe élastique et un lubrifiant, le dispositif de transmission comprenant également au moins un moyen de rétention (11,111,1012) empêchant le lubrifiant de sortir de la chambre, le moyen de rétention étant fixé à l'élément d'entrée de couple ou à l'élément de sortie de couple tout en étant mobile en rotation par rapport à l'élément de sortie de couple ou par rapport à l'élément d'entrée de couple respectivement,
**caractérisé en ce que** le moyen de rétention forme une rondelle de rétention (12,112,1012) formant un L en coupe transversale.

2. Dispositif selon la revendication 1, dans lequel le moyen de rétention est localisé radialement en dessous de l'organe élastique.

3. Dispositif selon l'une des revendications 1 ou 2, dans lequel le moyen de rétention comprend une première partie (13) et une deuxième partie (14), la première partie étant fixée sur l'élément d'entrée de couple ou l'élément de sortie de couple, la deuxième partie s'étendant de telle manière à retenir le lubrifiant à l'intérieur de la chambre.

4. Dispositif selon l'une des revendications précédentes, dans lequel le moyen de rétention comprend au moins un premier orifice (15) servant la fixation du moyen de rétention à l'élément d'entrée de couple ou à l'élément de sortie de couple.

5. Dispositif selon l'une des revendications 1 à 4 dans lequel l'élément de sortie de couple comprend un disque (8,108) et une masse secondaire (9,109), le disque formant une surface d'appui pour l'organe élastique, le moyen de rétention comprenant également au moins un deuxième orifice (16) configuré de telle manière à autoriser une fixation du disque avec la masse secondaire au travers du moyen de rétention.

6. Dispositif selon l'une des revendications 1 à 4, dans lequel
- l'élément d'entrée forme une masse primaire et un couvercle liés en rotation l'un à l'autre pour former la chambre et pour former au moins un premier appui contre lequel s'appuie l'organe élastique,
- l'élément de sortie de couple comprend un disque (8,108,1008) et une masse secondaire (9,109,1009), le disque formant un deuxième d'appui pour l'organe élastique, le dispositif de transmission comportant un premier moyen de rétention et un deuxième moyen de rétention, le premier moyen de rétention étant localisé entre la masse primaire et le disque et le deuxième moyen de rétention étant situé entre le disque et le couvercle.

7. Dispositif selon l'une des revendications 1 à 6, dans lequel le dispositif comporte également un dispositif pendulaire (18, 118,1018) comprenant un support et une pluralité de masses pendulaires (19,119).

8. Dispositif selon la revendication précédente, dans lequel, le support étant formé par l'élément de sortie.

9. Véhicule hybride comprenant un moteur électrique et un dispositif de transmission de couple selon l'une des revendications précédentes.

## Patentansprüche

1. Drehmomentübertragungsvorrichtung (1,100,1000) für ein Fahrzeug, insbesondere ein Kraftfahrzeug, umfassend
- ein Drehmomenteingangselement (2,102,1002), das geeignet ist, mit einem Antriebselement verbunden zu werden,
- ein Drehmomentausgangselement (7,107,1007), und
- ein elastisches Organ (6,106,1006), das zwischen dem Drehmomenteingangselement und dem Drehmomentausgangselement angeordnet ist, eine Kammer (5,105), die durch das Drehmomenteingangselement gebildet wird, wobei die Kammer das elastische Organ und ein Schmiermittel einschließt, wobei die Übertragungsvorrichtung außerdem mindestens ein Rückhaltemittel (11,111,1012) umfasst, das verhindert, dass das Schmiermittel aus der Kammer austritt, wobei das Rückhaltemittel an dem Drehmomenteingangselement oder an dem Drehmomentausgangselement befestigt ist, während es drehbar gegenüber dem Drehmomentausgangselement oder gegenüber dem Drehmomenteingangselement beweglich ist,
**dadurch gekennzeichnet, dass** das Rückhaltemittel eine Rückhaltescheibe (12,112,1012) bildet, die im Querschnitt ein L bildet.

2. Vorrichtung nach Anspruch 1, bei der das Rückhaltemittel radial unterhalb des elastischen Organs angeordnet ist.

3. Vorrichtung nach einem der Ansprüche 1 oder 2, bei der das Rückhaltemittel einen ersten Teil (13) und einen zweiten Teil (14) umfasst, wobei der erste Teil an dem Drehmomenteingangselement oder dem Drehmomentausgangselement befestigt ist, wobei sich der zweite Teil derart erstreckt, dass er das Schmiermittel im Inneren der Kammer zurückhält.

4. Vorrichtung nach einem der vorhergehenden Ansprüche, bei der das Rückhaltemittel mindestens eine erste Öffnung (15) umfasst, die zur Befestigung des Rückhaltemittels an dem Drehmomenteingangselement oder an dem Drehmomentausgangselement dient.

5. Vorrichtung nach einem der Ansprüche 1 bis 4, bei der das Drehmomentausgangselement eine Scheibe (8,108) und eine Sekundärmasse (9,109) umfasst, wobei die Scheibe eine Anlagefläche für das elastische Organ bildet, wobei das Rückhaltemittel außerdem mindestens eine zweite Öffnung (16) umfasst, die derart konfiguriert ist, dass sie eine Befestigung der Scheibe mit der Sekundärmasse durch das Rückhaltemittel hindurch ermöglicht.

6. Vorrichtung nach einem der Ansprüche 1 bis 4, bei der
- das Eingangselement eine Primärmasse und einen Deckel bildet, die drehfest miteinander verbunden sind, um die Kammer zu bilden und um mindestens ein erstes Auflager zu bilden, gegen das sich das elastische Organ abstützt,
- das Drehmomentausgangselement eine Scheibe (8,108,1008) und eine Sekundärmasse (9,109,1009) umfasst, wobei die Scheibe ein zweites Auflager für das elastische Organ bildet, wobei die Übertragungsvorrichtung ein erstes Rückhaltemittel und ein zweites Rückhaltemittel aufweist, wobei das erste Rückhaltemittel zwischen der Primärmasse und der Scheibe angeordnet ist und das zweite Rückhaltemittel zwischen der Scheibe und dem Deckel angeordnet ist.

7. Vorrichtung nach einem der Ansprüche 1 bis 6, bei der die Vorrichtung außerdem eine Pendelvorrichtung (18,118,1018) umfasst, die einen Träger und eine Vielzahl von Pendelmassen (19,119) umfasst.

8. Vorrichtung nach dem vorhergehenden Anspruch, bei der der Träger durch das Ausgangselement gebildet wird.

9. Hybridfahrzeug, umfassend einen Elektromotor und eine Drehmomentübertragungsvorrichtung nach einem der vorhergehenden Ansprüche.

## Claims

1. Torque transmission device (1,100,1000) for a vehicle, in particular a motor vehicle, comprising
- a torque input element (2,102,1002) suitable for being connected to a drive element,
- a torque output element (7,107,1007), and
- an elastic member (6,106,1006) interposed between the torque input element and the torque output element, a chamber (5,105) formed by the torque input element, the chamber enclosing the elastic member and a lubricant, the transmission device also comprising at least one retention means (11,111,1012) preventing the lubricant from exiting the chamber, the retention means being fixed to the torque input element or to the torque output element while being rotatably mobile relative to the torque output element or relative to the torque input element respectively,
**characterised in that** the retention means forms a retention washer (12,112,1012) forming an L-shape in cross-section.

2. Device according to Claim 1, in which the retention means is located radially below the elastic member.

3. Device according to one of Claims 1 or 2, in which the retention means comprises a first part (13) and a second part (14), the first part being fixed to the torque input element or the torque output element, the second part extending in such a way as to retain the lubricant inside the chamber.

4. Device according to one of the preceding claims, in which the retention means comprises at least one first aperture (15) serving to fix the retention means to the torque input element or to the torque output element.

5. Device according to one of Claims 1 to 4, in which the torque output element comprises a disc (8,108) and a secondary mass (9,109), the disc forming a bearing surface for the elastic member, the retention means also comprising at least one second aperture (16) configured in such a way as to allow the disc to be fastened to the secondary mass through the retention means.

6. Device according to one of Claims 1 to 4, in which
- the input element forms a primary mass and a cover rotationally connected to one another to form the chamber and to form at least one first bearing surface against which the elastic member bears,
- the torque output element comprises a disc (8,108,1008) and a secondary mass (9,109,1009), the disc forming a second bearing surface for the elastic member, the transmission device comprising a first retention means and a second retention means, the first retention means being located between the primary mass and the disc and the second retention means being located between the disc and the cover.

7. Device according to one of Claims 1 to 6, in which the device also comprises a pendulum device (18,118,1018) comprising a support and a plurality of pendulum masses (19,119).

8. Device according to the preceding claim, in which the support is formed by the output element.

9. Hybrid vehicle comprising an electric motor and a torque transmission device according to one of the preceding claims.
